# EUROPÄISCHE PATENTSCHRIFT

(11) **EP 2 414 746 B1**
(45) Veröffentlichungstag und Bekanntmachung des Hinweises auf die Patenterteilung: **12.10.2016**
(21) Anmeldenummer: 10710360.8
(22) Anmeldetag: 26.03.2010
(51) Int. Cl.: F25B 30/04

(54) **ARBEITSMITTELSPEICHER, WÄRMEÜBERTRAGER UND WÄRMEPUMPE**
OPERATING RESOURCE STORE, HEAT TRANSFER DEVICE AND HEATING PUMP
ACCUMULATEUR DE FLUIDE DE TRAVAIL, ÉCHANGEUR DE CHALEUR ET POMPE À CHALEUR

(30) Priorität: 31.03.2009 DE 102009015102; 05.05.2009 DE 102009019712
(43) Veröffentlichungstag der Anmeldung: 08.02.2012
(60) Teilanmeldung: 15193671.3
(73) Patentinhaber: MAHLE Behr GmbH & Co. KG, 70469 Stuttgart (DE)
(72) Erfinder: ANGERMANN, Hans-Heinrich, 70567 Stuttgart (DE); BURK, Roland, 70469 Stuttgart (DE); ZWITTIG, Eberhard, 73269 Hochdorf (DE)
(74) Vertreter: Grauel, Andreas
(86) Internationale Anmeldenummer: PCT/EP2010/054038
(87) Internationale Veröffentlichungsnummer: WO 2010/112433

(56) Entgegenhaltungen:
- WO-A1-2007/068481
- WO-A2-2007/073849
- DE-A1- 19 818 807
- JP-A- 8 247 575
- JP-A- 10 141 803
- JP-A- 2007 218 504
- JP-A- 2007 245 025
- US-A1- 2007 095 277

## Beschreibung

Die Erfindung betrifft einen Arbeitsmittelspeicher mit einem Sorptionsmittel, einen Arbeitsmittelspeicher mit kapillarischen Spaltbereichen, einen Wärmeübertrager mit zwei Arbeitsmittelspeichern sowie eine Wärmepumpe nach dem Oberbegriff des Anspruchs 9.

EP 1 918 668 A1 beschreibt kapillarische Strukturen zur Aufnahme eines Fluids. Das Dokument JP 2007 218504 A offenbart einen Arbeitsmittelspeicher mit Schichten aus Metallblech.

WO 2007/068481 A1 beschreibt eine Wärmepumpe aus einem fest miteinander verbundenen Stapel von plattenartigen Hohlelementen, wobei die Hohlelemente Adsorber-Desorber-Bereiche sowie Verdampfungs-Kondensations-Bereiche umfassen und an den Hohlelementen Strömungskanäle für wärmetransportierende Fluide in thermischem Kontakt vorgesehen sind. Die Strömungskanäle werden über Paare von Rotationsventilen wechselnd seriell miteinander verschaltet.

Eine solche Wärmepumpe hat viele mögliche Anwendungen, z. B. die Abwärmenutzung in Stationärtechnik, z. B. Gebäudetechnik, solare Klimatisierung, Kraft-Wärme-Kältekopplungsanlagen oder auch Fahr- und Stand-klimaanlagen für Fahrzeuge, insbesondere Nutzkraftwagen.

Die Hohlelemente der bekannten Wärmepumpe können als Wärmeübertrager aufgefasst werden, wobei die Wärme als Latentwärme des Arbeitsmittels zwischen dem Adsorber/Desorberbereich und dem Verdampfer-Kondensations-Bereich transportiert wird.

Es ist die Aufgabe der Erfindung, einen Arbeitsmittelspeicher anzugeben, der ein hohes Speichervermögen und eine hohe Be- und Entladekinetik aufweist.

Diese Aufgabe wird für einen Arbeitsmittelspeicher mit einem Sorptionsmittel erfindungsgemäß mit den Merkmalen des Anspruch 1 gelöst. Die nicht notwendig, aber in bevorzugter Ausführungsform stoffschlüssige Verbindung von Sorptionsmittel und Blechschicht ermöglicht im Gegensatz zu rein kraft- oder formschlüssigen Verbindungen neben einer einfachen und sicheren Montage einen verbesserten Wärmeübertrag von dem Arbeitsmittel über das Sorptionsmittel auf die Blechschicht. Unter einer Blechschicht im Sinne der Erfindung sind sowohl separate Bleche als auch Schichten zum Beispiel eines im Zickzack gefalteten Blechstreifens zu verstehen. Aktivkohle ist ein bevorzugtes Sorptionsmittel, wobei die Erfindung nicht auf dieses Sorptionsmittel beschränkt ist. Ein insbesondere bei Verwendung von Aktivkohle mögliches, aber nicht notwendiges Arbeitsmittel ist Methanol. Die Bleche können bei einer bevorzugten Ausführungsform aus Kupfer bestehen, wobei die thermisch kontaktierten weiteren Strukturen aus Messing bestehen und mit den kupfernen Blechen verlötet, insbesondere hartverlötet sind. Die Hartverlötung kann mittels bekannten Verfahren wie etwa "Cuprobraze" erfolgen. Bevorzugt wird auf Flussmittel im Bereich der Bleche verzichtet. Maßnahmen wie zum Beispiel Vibrationen und/oder Schutzgas- oder Formiergasatmosphären können ergriffen werden, um die Oberflächen bei der Verlötung zu reduzieren, Oxidation zu verhindern und/oder Oxidschichten aufzureißen.

In bevorzugter Ausführungsform ist das Sorptionsmittel als insbesondere extrudierter Formkörper ausgebildet, wodurch eine optimale Füllung des zur Verfügung stehenden Raums erreichbar ist und gleichzeitig Transportkanäle für die Zu- bzw. Abführung sowie Verteilung von Arbeitsmittel einbringbar sind. Die Extrusion von Aktivkohle kann zum Beispiel als Gemisch von pulverisierter Aktivkohle mit einem Bindemittel erfolgen, welches bevorzugt nach der Herstellung und/oder stoffschlüssigen Verbindung des Formkörpers karbonisiert werden kann. Der Formkörper kann insbesondere streifenförmig bzw. ein flacher Quader sein.

In einer weiteren besonders bevorzugten Ausführungsform ist das Sorptionsmittel nicht als extrudierter Formkörper sondern als Monolage einer Granulat- oder Partikelschicht beidseitig auf die Metallträgerrippe stoffschlüssig, insbesondere mittels eines Klebers oder Binders so aufgebracht, dass jedes Partikel einen thermischen Direktkontakt zum Metallträger aufweist und der Metallträger eine hohe Belegungsdichte aufweist. Dazu kann es vorteilhaft sein, die Beschichtung beispielsweise im Wirbelschichtverfahren zunächst mit einer größeren und nachfolgend mit einer kleineren partikulären Größenfraktion des Adsorbers zu beschichten. Bei den Adsorberpartikeln kann es sich um Bruchgranulat, Kugeln, geformten Pellets und Stapelfasern oder eine Kombination oder Mischung dieser Formen handeln.

In weiterer Ausführungsform hat zumindest eines von beiden, Sorptionsmittel oder mit dem Sorptionsmittel verbundene Blechschicht, eine Strukturierung bezüglich einer thermischen Dehnungsrichtung. Durch eine solche Strukturierung können thermisch bedingte Materialdehnungen kompensiert werden, ohne dass zum Beispiel das Sorptionsmittel von der Blechschicht abplatzt. Bei einem möglichen Beispiel umfasst die Strukturierung Querrillen im häufig spröden Sorptionsmittel, die zum Beispiel als Sollbruchstellen dienen und bevorzugt zugleich als Dampfkanäle für das Arbeitsmittel fungieren. Bei einem weiteren, alternativen oder ergänzenden Beispiel weist die Blechschicht Querrillen oder ähnliche Faltungen auf, die die thermische Ausdehnung aufnehmen können.

Allgemein treten thermische Materialspannungen nicht nur im Betrieb des Arbeitsmittelspeichers auf, sondern auch während der Fertigung. Zum Beispiel kann im Rahmen einer Verlötung z.B. der Blechschichten in einem Lötofen eine größere thermische Materialspannung bezüglich des bevorzugt stoffschlüssig aufgebrachten Sorptionsmittels auftreten als es im Betrieb des Arbeitsmittelspeichers der Fall ist.

Vorteilhaft kann somit die Strukturierung als Kerbung oder Rillung des Sorptionsmittels ausgebildet sein, um Sollbruchstellen zur Vermeidung eines Abplatzens bereit zu stellen.

In vorteilhafter Ausführungsform kann das Sorptionsmittel alternativ oder ergänzend eine anisotrope Elastizität und/oder Wärmeleitung aufweisen, wobei in bevorzugter Detailgestaltung eine mechanische Schwächung parallel zu einer thermischen Ausdehnungsrichtung der Blechschicht ausgebildet ist. Durch eine solche gerichtete Schwächung kann zum Beispiel das Sorptionsmittel bei einer thermischen Ausdehnung der Blechschicht in Schollen aufbrechen, wobei die einzelnen Schollen weiterhin stoffschlüssig mit der Blechschicht verbunden bleiben. Eine Aufbrechung bzw. ein Zerfall in solche im Wesentlichen senkrecht zur Blechschicht ausgerichteten Schollen begünstigt zudem den Austausch von Arbeitsmittel mit dem Sorptionsmittel über die Dicke der Sorptionsmittelschicht. Bei einer bevorzugten Ausführungsform ist dem Sorptionsmittel zur Erzeugung einer solchen anisotropen Elastizität und/oder Wärmeleitung ein faseriger oder plättchenförmiger, bezüglich der Anisotropie ausgerichteter Zuschlagstoff beigemengt. Das Sorptionsmittel kann bevorzugt Aktivkohle sein, und der Zuschlagstoff kann bevorzugt Kohlefaser und/oder Graphitplättchen sein.

Bei einer alternativen oder ergänzenden Ausführungsform ist die Strukturierung als Wellung der Blechschicht ausgebildet, so dass eine thermische Ausdehnung der Blechschicht zumindest teilweise durch die Wellung aufgenommen wird. In bevorzugter Detailgestaltung überkreuzen sich dabei zwei oder mehrere Wellungen von unterschiedlicher Orientierung, so dass stoffschlüssig mit dem Sorptionsmittel verbundene Kontaktinseln gebildet werden. Solche Strukturen in der Blechschicht sind einfach und kostengünstig herstellbar, zum Beispiel durch einen quasi-kontinuierlichen Herstellungsschritt mit Prägewalzen. Die Wellung kann verschiedene Formen aufweisen, etwa Sinusform, Rechteckform, Trapezform oder nach Art einer Plissierung mit überlappenden Abschnitten.

Allgemein bevorzugt sind die weiteren Strukturen als Rohre, insbesondere Flachrohre, ausgebildet, wobei in den Blechschichten Durchzüge zur Durchführung der Rohre ausgebildet sind. Auf diese Weise kann Latentwärme des Arbeitsmittels mit einem in den Rohren strömenden, wärmeführenden Fluid ausgetauscht werden. Das Fluid kann dabei je nach Anwendung flüssig, gasförmig oder mehrphasig (Nassdampf) sein.

Bei einer besonders bevorzugten Ausführungsform der Erfindung haben die Blechschichten zumindest im Bereich der stoffschlüssigen Verbindung mit dem Sorptionsmittel eine bevorzugt galvanisch erzeugte Aufrauung der Oberfläche. Die Aufrauung kann auch auf andere Weise, etwa durch Ätzung, erzeugt werden. Durch galvanische Verfahren kann aber eine besonders geeignete Strukturierung durch Aufwachsen von zum Beispiel säulenartigen Kristalliten erzeugt werden. Durch die Aufrauung kann eine gute, zumindest teilweise formschlüssige stoffschlüssige Verbindung mit dem Sorptionsmittel erreicht werden, wobei auch die Wärmeübertragung durch vergrößerte Kontaktflächen verbessert ist.

Allgemein vorteilhaft übersteht die stoffschlüssige Verbindung Temperaturen oberhalb von 300 °C, wobei sie bevorzugt mittels zumindest einem von beiden, anorganischer Klebstoff oder karbonisierter organischer Klebstoff, ausgebildet ist. Hierdurch ist eine Verlötung, insbesondere Hartverlötung, zum Beispiel der Blechschichten mit den weiteren Strukturen nach Aufbringung des Sorptionsmittels möglich. Unter einem anorganischen Klebstoff kann zum Beispiel ein silikatbasierter Kleber, etwa Wasserglas, verstanden werden. Im Fall von organischen Klebstoffen sind solche zu bevorzugen, die einen hohen Kohlenstoffanteil aufweisen, zum Beispiel Phenolharze. Diese Klebstoffe ermöglichen eine stabile Karbonisierung, etwa durch Erhitzen in einer Schutzgasatmosphäre. Die Karbonisierung des Klebstoffs kann insbesondere im Rahmen einer Hartverlötung von Bauteilen des Arbeitsmittelspeichers in einem Lötofen erfolgen.

Die Aufgabe wird für einen Arbeitsmittelspeicher mit kapillarischen Spalten zur Speicherung einer kondensierten Phase des Arbeitsmittels gelöst. Durch stapelartige Schichtung der strukturierten Bleche, die in unmittelbarem Kontakt miteinander stehen, lassen sich große Mengen Arbeitsmittel einfach und kostengünstig speichern.

Bei einer möglichen Ausführungsform umfassen die strukturierten Bereiche jeweils eine Mehrzahl von Rillen. In alternativer oder ergänzender Ausführungsform können die strukturierten Bereiche jeweils eine Mehrzahl von Noppen umfassen.

In einer bevorzugten Ausführungsform grenzen die strukturierten Bereiche an zwischen den Blechschichten ausgebildeten Hauptdampfkanälen an. In bevorzugter aber nicht notwendiger Detailgestaltung verlaufen die Hauptdampfkanäle dabei benachbart der wärmeleitend kontaktierten Struktur. Bei dieser Struktur kann es sich insbesondere um fluidführende Rohre handeln, zum Beispiele Flachrohre, die durch Durchzüge in den Blechschichten hindurchgeführt sind.

In vorteilhafter Detailgestaltung sind dabei zwischen zwei der Blechschichten zumindest zwei Hauptdampfkanäle ausgebildet, wobei zumindest einer dieser Hauptdampfkanäle einen größeren Querschnitt aufweist. Zumindest der Hauptdampfkanal mit dem größeren Querschnitt läuft bevorzugt bei Sättigung des Arbeitsmittelspeichers nicht voll, so dass jederzeit eine gute Zirkulation von dampfförmigem Arbeitsmittel zwischen den Blechschichten gegeben ist.

Allgemein vorteilhaft haben die Oberflächen der Blechschichten eine Bearbeitung zur Verbesserung einer Benetzbarkeit mit dem Arbeitsmittel, insbesondere mittels galvanischer Behandlung. So kann eine Aufrauung geeigneter Dimensionierung bereits die Benetzung der Oberflächen verbessern. Dabei wird zum einen ein schnelleres Kondensieren und Verdampfen erzielt und zum anderen die maximale Arbeitsmittelkapazität des Speichers verbessert.

Die Aufgabe der Erfindung wird für einen Wärmeübertrager mit zwei Arbeitmittelspeichern durch die Merkmale des Anspruchs 8 gelöst. Dabei ist bei einer bevorzugten, aber nicht notwendigen Ausgestaltung zumindest einer der Arbeitsmittelspeicher als ein Arbeitsmittelspeicher nach einem der Ansprüche 1 bis 7 ausgebildet.

In bevorzugter Weiterbildung der Erfindung ist auch der jeweils andere der beiden Arbeitsmittelspeicher nach einem der Ansprüche 1 bis 7 ausgebildet. Ein solcher Wärmeübertrager hat einen ersten Arbeitsmittelspeicher mit einem Sorptionsmittel zur Adsorption und Desorption einer Gasphase des Arbeitsmittels sowie einen weiteren Arbeitsmittelspeicher zur Kondensation und Verdampfung des Arbeitsmittels.

In effektiver und günstiger Bauweise sind die beiden Arbeitsmittelspeicher in einem gemeinsamen Gehäuse aufgenommen, wobei die wärmeleitend kontaktierten Strukturen als stirnseitige Böden des Gehäuses durchgreifende, zumindest ein Fluid führende Rohre ausgebildet sind. Zum Beispiel in Anwendungen einer Wärmepumpe können die Rohre dabei zwei verschiedene Fluide, führen, zum Beispiel die mit dem ersten Arbeitsmittelspeicher in thermischem Austausch stehenden Rohre eine Flüssigkeit und die mit dem zweiten Arbeitsmittelspeicher in thermischem Kontakt stehenden Rohre ein Gas wie z.B. zu klimatisierende Luft. Dabei können diese beiden Rohre bzw. Rohrgruppen auch verschiedene Größen und Querschnitte aufweisen. Wesentlich im Sinne der erfinderischen Detailgestaltung ist dabei der fluid- und arbeitsmitteldichte Anschluss der Rohre an die Böden. So wird es ermöglicht, bewährte Konstruktionsprinzipien von Rohrbündel-Wärmetauschern in ihren Vorteilen zu nutzen, um sie mit einer Latentwärmeübertragung mittels Arbeitsmittelspeichern und einem Arbeitsmittel erfindungsgemäß zu kombinieren.

Bei einer besonders bevorzugten Ausführungsform ist der Wärmeübertrager als Modul ausgebildet, wobei wenigstens zwei der Module sequentiell in Richtung der Rohre fluiddicht stapelbar sind. Auf diese Weise lassen sich je nach Anforderungen Wärmeübertrager verschiedener Größe und Übertragungskapazität aus einem in günstiger Serienfertigung erzeugten Modul herstellen. In einfacher und zweckmäßiger Detailgestaltung haben die Böden dabei eine Dichtfläche, wobei die Dichtfläche zur fluiddichten Stapelung mit einer Dichtung zusammenwirkt. Bei der Dichtfläche kann es sich beispielhaft um einen umlaufenden Wulst und bei der Dichtung um eine an den Wulst angepresste Flachdichtung handeln. Bei einem anderen Beispiel ist die Dichtfläche als Nut ausgebildet, in die eine umlaufende Ringdichtung eingelegt ist. Bei einer weiteren bevorzugten Weiterbildung ist ein Wasserkasten mittels der Dichtfläche fluiddicht an dem Boden festlegbar. Hierdurch kann erreicht werden, dass auch endständige Module eines Modulstapels keine abweichende Ausgestaltung erfordern.

Allgemein vorteilhaft hat der Wärmeübertrager einen Gehäusemantel, wobei der Gehäusemantel und die Böden einen geschlossenen Hohlraum umschließen, in dem die Arbeitsmittelspeicher angeordnet sind. Ein solcher Gehäusemantel kann in einfacher Gestaltung zum Beispiel ein umlaufender, an einer Nahtstelle verschlossener Blechstreifen sein. Die Festlegung des Gehäusemantels an den Böden kann insbesondere in einem nachgeordneten Verfahrensschritt erfolgen, nachdem zunächst bei zum Beispiel Arbeitsmittelspeicher und Rohre miteinander hartverlötet wurden. Der Gehäusemantel kann hiernach z.B. verklebt, weichverlötet, verschweisst oder auch hartverlötet werden.

Vorteilhaft ist, dass die strukturierten Bereiche an zwischen den Blechschichten ausgebildeten Hauptdampfkanälen angrenzen, wobei insbesondere die Hauptdampfkanäle benachbart der wärmeleitend kontaktierten Struktur verlaufen.

Vorteilhaft ist, dass zwischen zwei der Blechschichten zumindest zwei Hauptdampfkanäle ausgebildet sind, wobei zumindest einer dieser Hauptdampfkanäle einen größeren Querschnitt aufweist.

Vorteilhaft ist, dass die Oberflächen der Blechschichten eine Bearbeitung zur Verbesserung einer Benetzbarkeit mit dem Arbeitsmittel aufweisen, insbesondere mittels galvanischer Behandlung.

Vorteilhaft ist, dass sowohl der eine als auch der jeweils andere der beiden Arbeitsmittelspeicher ausgebildet ist.

Vorteilhaft ist, dass die beiden Arbeitsmittelspeicher in einem gemeinsamen Gehäuse aufgenommen sind, wobei die wärmeleitend kontaktierten Strukturen als stirnseitige Böden des Gehäuses durchgreifende, zumindest ein Fluid führende Rohre ausgebildet sind.

Vorteilhaft ist, dass der Wärmeübertrager als Modul ausgebildet ist, wobei wenigstens zwei der Module sequentiell in Richtung der Rohre fluiddicht stapelbar sind.

Vorteilhaft ist, dass die Böden eine Dichtfläche aufweisen, wobei die Dichtfläche zur fluiddichten Stapelung mit einer Dichtung zusammenwirkt.

Vorteilhaft ist, dass ein Wasserkasten mittels der Dichtfläche fluiddicht an dem Wärmeübertrager festlegbar ist.

Vorteilhaft ist ein Wärmeübertrager, umfassend einen Gehäusemantel, wobei der Gehäusemantel und die Böden einen geschlossenen Hohlraum umschließen, in dem die Arbeitsmittelspeicher angeordnet sind.

Die Aufgabe der Erfindung wird zudem für eine eingangs genannte Wärmepumpe durch die kennzeichnenden Merkmale des Anspruchs 1 gelöst.

Nachfolgend werden mehrere bevorzugte Ausführungsbeispiele der Erfindung beschrieben und anhand der anliegenden Zeichnungen näher erläutert.
- Fig. 1: zeigt eine räumliche Gesamtansicht einer erfindungsgemäßen Wärmepumpe.
- Fig. 2: zeigt eine Explosionsansicht der Wärmepumpe aus Fig. 1.
- Fig. 3: zeigt eine Draufsicht auf die Wärmepumpe aus Fig. 1 von der Seite.
- Fig. 4: zeigt eine schematische räumliche Darstellung eines erfindungsgemäßen Wärmeübertragers.
- Fig. 5: zeigt eine räumliche Darstellung von Teilen des Wärmeübertragers aus Fig. 4.
- Fig. 6: zeigt eine schematische Schnittdarstellung durch den Wärmeübertrager aus Fig. 4 im Bereich eines ersten Arbeitsmittelspeichers mit einem Sorptionsmittel.
- Fig. 7: zeigt mehrere Ansichten einer Blechschicht des Arbeitsmittelspeichers aus Fig. 6.
- Fig. 8: zeigt eine Draufsicht auf eine Abwandlung der Blechschicht aus Fig. 7.
- Fig. 8a: zeigt eine Schnittansicht einer weiteren Abwandlung der Blechschicht aus Fig. 7.
- Fig. 8b: zeigt eine Schnittansicht einer weiteren Abwandlung der Blechschicht aus Fig. 7.
- Fig. 8c: zeigt eine ausschnittsweise Draufsicht einer weiteren Abwandlung der Blechschicht aus Fig. 7.
- Fig. 8d: zeigt eine Schnittansicht einer weiteren Abwandlung der Blechschicht aus Fig. 7 mit verschiedenen Strukturierungen eines Adsorptionsmittels.
- Fig. 8e: zeigt eine räumliche Schnittansicht einer weiteren Abwandlung der Blechschicht aus Fig. 7.
- Fig. 9: zeigt eine weitere Schnittansicht und Draufsicht des Arbeitsmittelspeichers aus Fig. 7.
- Fig. 10: zeigt eine teilweise Schnittansicht durch eine weitere Ausführungsform eines erfindungsgemäßen Wärmeübertragers.
- Fig. 11: zeigt eine gesamte schematische Schnittansicht des Wärmeübertragers aus Fig. 10.
- Fig. 12: zeigt eine schematische räumliche Ansicht des Wärmeübertragers aus Fig. 10.
- Fig. 13: zeigt eine Schnittansicht eines weiteren Ausführungsbeispiels eines erfindungsgemäßen Wärmeübertragers.
- Fig. 14: zeigt mehrere Ansichten einer Blechschicht eines zweiten Arbeitsmittelspeichers mit kapillarischen Strukturen.
- Fig. 15: zeigt eine Schnittansicht des Wärmeübertragers aus Fig. 6 im Bereich eines zweiten Arbeitsmittelspeichers mit Blechschichten nach Fig. 14.
- Fig. 16: zeigt eine Schnittansicht durch den Arbeitsmittelspeicher aus Fig. 15 parallel zu den Blechschichten.
- Fig. 17: zeigt mehrere Ansichten einer ersten Abwandlung des Arbeitsmittelspeichers aus Fig. 15.
- Fig. 18: zeigt eine Schnittansicht durch eine weitere Abwandlung des Arbeitsmittelspeichers aus Fig. 15 parallel zu den Blechschichten.
- Fig. 19: zeigt eine weitere Ausführungsform eines zweiten Arbeitsmittelspeichers mit kapillarischen Strukturen.

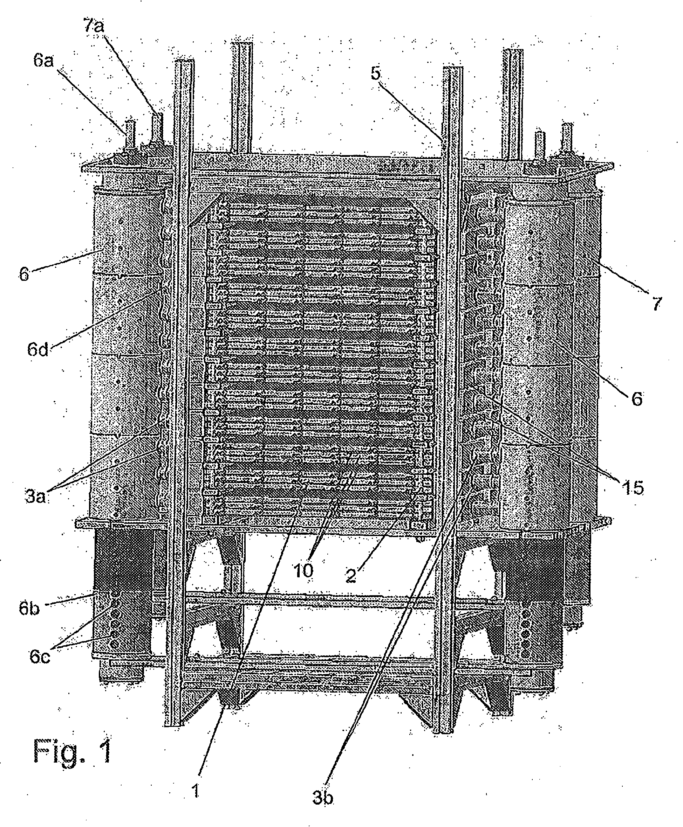

in Fig. 1 ist eine Wärmepumpe dargestellt, bei der eine Mehrzahl von vorliegend insgesamt zwölf Wärmeübertragern 1 nach Art eines Stapels parallel zueinander angeordnet sind. Der Stapel aus Wärmeübertragern 1 ist über Zuganker 2 lösbar zu einer baulichen Einheit verbunden.

Jeder der Wärmeübertrager 1 hat eine erste Zone A in Form einer Adsorbtions/Desorptionszone und eine zweite Zone B in Form einer Verdampfungs/Kondensationszone. Die erste Zone A wird für jeden der Wärmeübertrager 1 von einem jeweils ersten Strömungskanal 3 eines umströmenden, über eine nicht dargestellte Pumpe geförderten Fluids durchgriffen und die zweite Zone B wird für jeden der Wärmeübertrager 1 von einem zweiten Strömungskanal 4 des Fluids durchgriffen. Jeder der Strömungskanäle 3, 4 hat dabei stirnseitige Anschlüsse 3a, 3b, die sich entgegengesetzt gegenüberliegen und jeweils als Zuführungen oder Abführungen für das die Strömungskanäle 3, 4 durchströmende Fluid dienen.

Der über die Zuganker 2 zusammengehaltene Stapel aus Wärmeübertragern 1 ist in einem Tragrahmen 5 der Wärmepumpe angeordnet. Außenseitig des Tragrahmens 5 sind insgesamt vier Rotationsventile angeordnet und mit dem Stapel von Wärmeübertragern 1 verbunden, wobei zwei im Wesentlichen baugleiche Rotationsventile 6 mit den Zu- und Abführungen 3a, 3b der Sorptionsseite A verbunden sind. Zwei hiervon insbesondere bezüglich der Anzahl der im Ventil separierten Strömungskanäle im Allgemeinen abweichend gebaute, jedoch zueinander baugleiche Rotationsventile 7 sind mit der zweiten Zone bzw. Verdampfungs/Kondensationsseite B der Wärmeübertrager 1 verbunden.

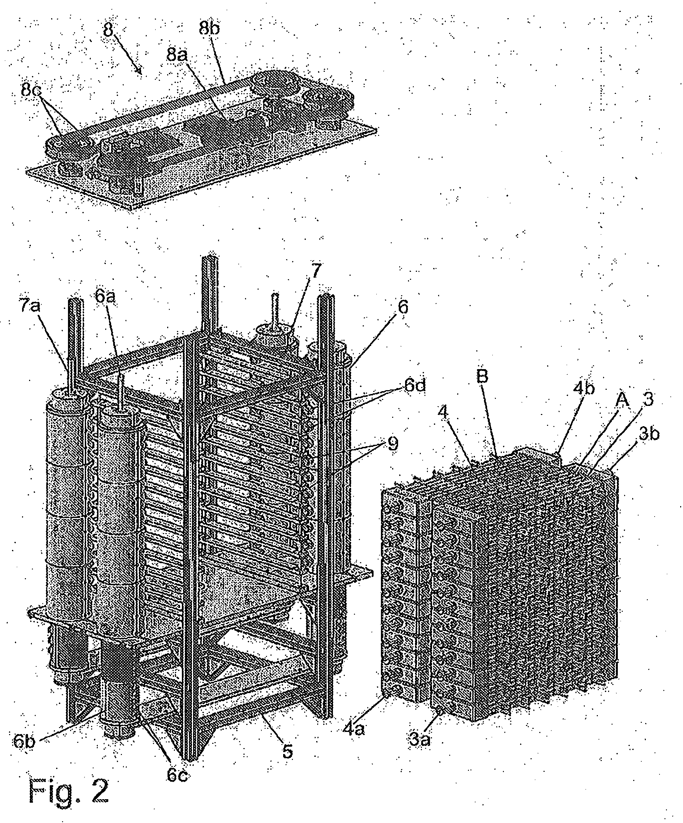

Die Rotationsventile 6, 7 sind sämtlich parallel zueinander ausgerichtet, wobei zentrale Drehwellen 6a, 7a der Rotationsventile 6, 7 mit einer modulartigen Antriebseinheit 8 verbunden sind, die in Fig. 2 schematisch dargestellt ist. Die Antriebseinheit 8 umfasst einen Elektromotor 8a, durch den über einen Zahnriemen 8b vier Antriebsräder 8c zum Antrieb der jeweiligen Achsen 7a, 6a der Rotationsventile 6, 7 synchronisiert bewegt werden. Bei der vorliegenden Konstruktion werden sämtliche Rotationsventile 6, 7 mit der gleichen Winkelgeschwindigkeit angetrieben.

Die Rotationsventile 6 der Sorptionsseite A der Wärmeübertrager 1 haben einen Zuführbereich 6b, der über zwölf separate Zuführungen 6c verfügt, so dass jeder der zwölf Wärmeübertrager 1 einem separaten Kanal innerhalb des Rotationsventils 6 entspricht. Die Rotationsventile 7 der Verdampferseite B haben eine kleinere Anzahl von nur vier separaten Zuführungen 7c in einem Zuführbereich 7b, da auf dieser Seite der Wärmepumpe in der Regel keine so stark differenzierte Trennung der Strömungskanäle notwendig ist wie auf der Sorptionsseite. Entsprechend sind jeweils mehrere bzw. vorliegend drei der Hohlelemente 1 bezüglich ihrer zweiten Zone B mit jeweils einem der Strömungskanäle in den Ventilen 7 gleichzeitig verbunden. Hierzu und zum Funktionsprinzip der Wärmepumpe wird auf die Erläuterungen im Stand der Technik WO 2007/068481 A1 verwiesen.

Die benachbarten Wärmeübertrager 1 sind zueinander beabstandet gehalten, was vorliegend durch geeignete Abstandsstücke 9 zwischen den Hohlelementen erreicht wird. Zwischen den Wärmeübertragern 1 verbleibt somit jeweils ein Luftspalt, so dass sie thermisch gut voneinander isoliert sind. Zur weiteren Verbesserung der thermischen Isolation können nicht dargestellte Dämmplatten, z. B. aus geschäumten Polymer oder faserigen Dämmstoffen eingelegt sein.

Die einzelnen Anschlüsse 3a, 3b, 4a, 4b der Wärmeübertrager 1 sind mit korrespondierenden Anschlüssen 6d, 7d der Rotationsventile 6, 7 verbunden, welche sich jeweils in einer Reihe ausgerichtet radial von den Wänden eines Abführbereichs der wesentlichen zylindrisch geformten Rotationsventile erstrecken. Zum Ausgleich von thermisch bedingten Dehnungen der Wärmepumpe sind die Anschlüsse 7d, 6d der Rotationsventile 6, 7 mit den Anschlüssen 3a, 3b, 4a, 4b des Stapels aus Wärmeübertragern 1 über elastische Verbindungsstücke, z. B. Schlauchstücke oder Wellbälge, verbunden.

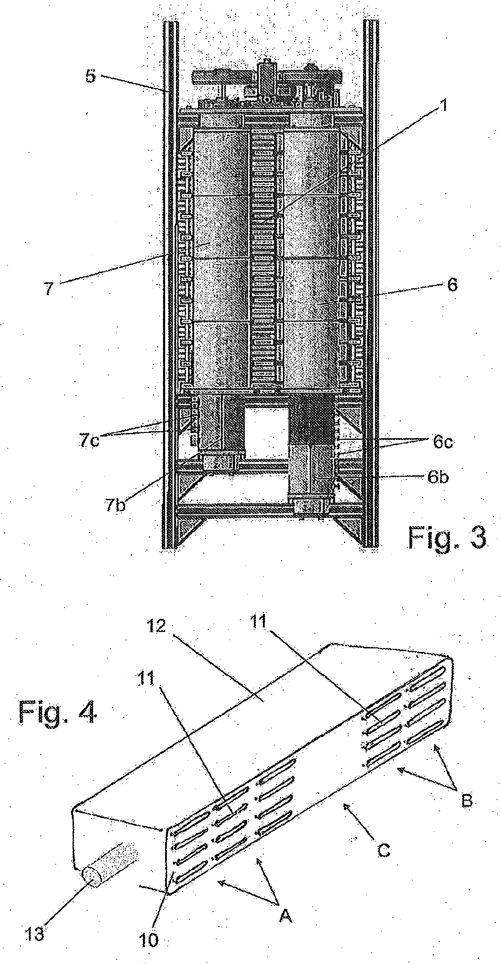

Gemäß Fig. 4 sind die Wärmeübertrager 1 der Wärmepumpe so aufgebaut, dass ein Arbeitsmittelspeicher auf einer Sorptionsseite A und ein Arbeitsmittelspeicher auf einer gegenüberliegenden Verdampfungsseite B in einem Gehäuse 9 angeordnet sind. Das Gehäuse 9 umfasst zwei parallele Böden 10 mit Durchzügen, in denen die Enden von Flachrohren 11 aufgenommen sind. Die Böden 10 werden von einem umlaufenden Gehäusemantel 12 zu einem arbeitsmitteldichten Hohlraum abgeschlossen. In dem Gehäusemantel 12 sind ein oder mehrere Füllröhrchen 13 vorgesehen, mittels derer der Hohlraum evakuiert und mit Arbeitsmittel befüllt werden kann. Insbesondere kann es sich um eine Dauerfüllung handeln, wobei zum Beispiel die Füllröhrchen nach dem Befüllen durch Deformation dauerhaft verschlossen werden.

Eine erste Gruppe von Flachrohren 11 im Bereich des ersten Arbeitsmittelspeichers A bildet den Strömungskanal 3 für ein erstes wärmeführendes Fluid und eine zweite Gruppe von Flachrohren 11 im Bereich des zweiten Arbeitsmittelspeichers B bildet den Strömungskanal 4 für ein weiteres wärmeführendes Fluid. Zwischen den Gruppen von Flachrohren 11 ist ein freier Abstand C ausgebildet, der die Funktion einer adiabaten Zone zwischen den Bereichen A, B ausübt. Durch diese Zone soll möglichst keine Wärmeleitung erfolgen, wobei jedoch gasförmiges Arbeitsmittel als Träger von Latenzwärme durch diese Zone zwischen den Arbeitsmittelspeichern in den Bereichen A, B verlagerbar ist.

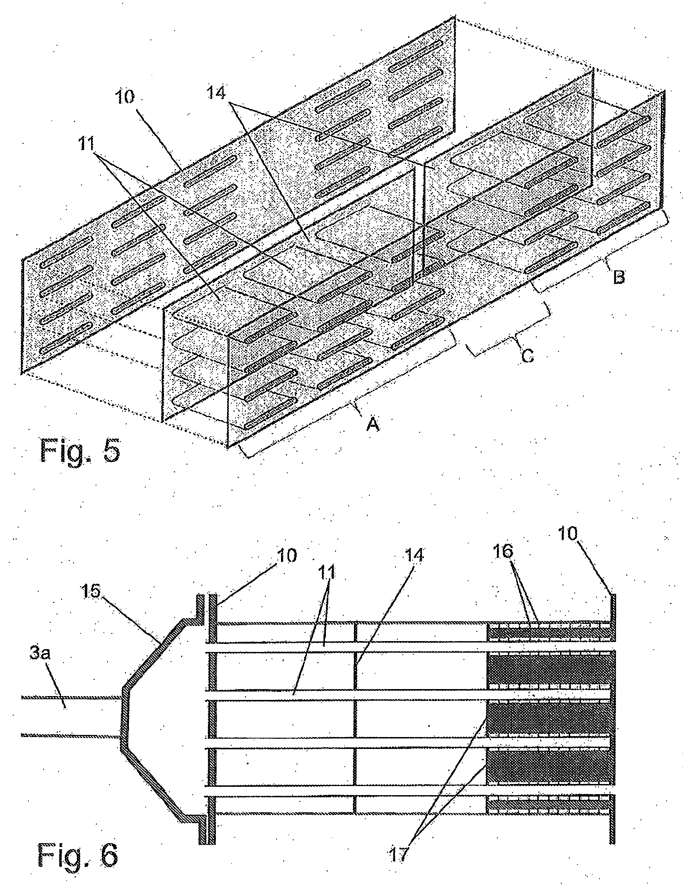

Fig. 5 zeigt eine teilweise Darstellung des Wärmeübertragers 1, bei der die Arbeitsmittelspeicher nicht gezeigt sind. Die Flachrohre 11 sind innerhalb des Hohlraums von weiteren Stützböden 14 mechanisch abgestützt, um größere Festigkeit gegenüber Differenzdrücken des Arbeitsmittels zur Umgebung hin zu erzielen. Die Stützböden 14 haben nur stützende, aber keine dichtende Funktion. Im Bereich der adiabaten Zone C sind die Stützböden geteilt, um die Zonen A, B thermisch besser voneinander zu isolieren.

In Fig. 6 ist der Wärmeübertrager zudem mit einem aufgesetzten Sammlerkasten 15 gezeigt, der einen der stirnseitigen Anschlüsse 3a für das erste, sorptionsseitige Fluid aufweist.

Die Schnittansicht Fig. 6 verläuft zudem durch den ersten Bereich A und den ersten Arbeitsmittelspeicher. Dieser besteht aus einem Stapel von parallelen Blechen bzw. Blechschichten 16 aus Kupferblechen, auf denen jeweils Streifen eines Sorptionsmittels, je nach Anforderungen ein- oder beidseitig, festgelegt sind.

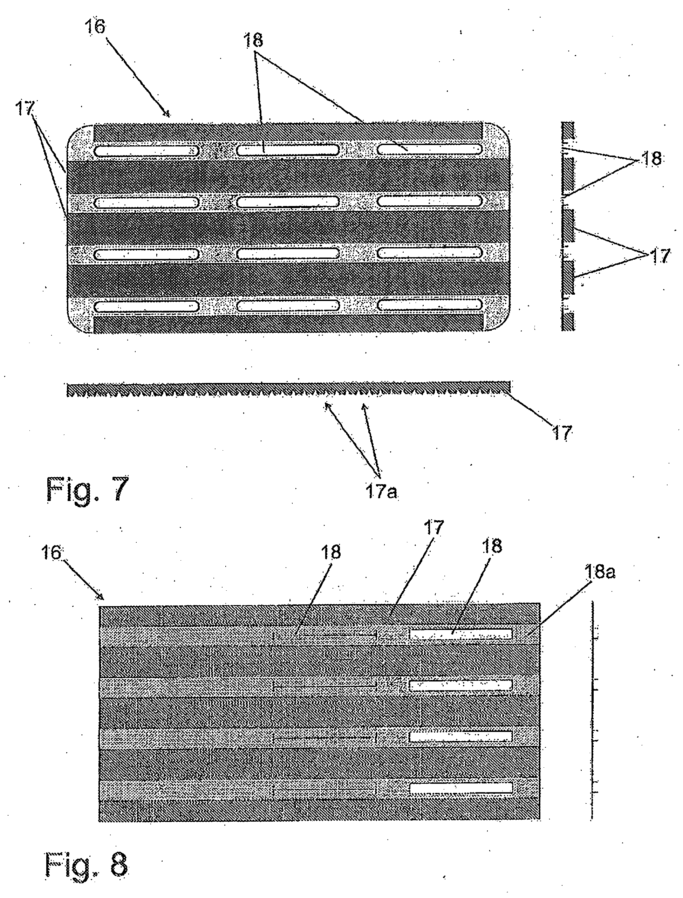

Fig. 7 zeigt mehrere Draufsichten auf eines der Bleche 16. Das Kupferblech hat eine Dicke im Bereich von 0,01 bis 1 mm, bevorzugt nicht mehr als etwa 0,1 mm.

Bei dem Sorptionsmittel handelt es sich um Aktivkohle, die zu Formkörpern in Form von Streifen 17 extrudiert wurde. Die Streifen 17 haben eine bevorzugte Dicke im Bereich von 0,5 mm bis 2,5 mm, bevorzugt etwa 1,5 mm. Hierdurch wird ein gutes Verhältnis zwischen aktiven Massen (Sorptionsmittel) und passiven Massen (Bleche) des Arbeitsmittelspeichers geschaffen, wobei zugleich ein effektiver Wärmeübertrag bei Adsorption oder Desorption des Arbeitsmittels gewährleistet ist. Bei dem Arbeitsmittel handelt es sich in den vorliegenden Ausführungsbeispielen um Methylalkohol (Methanol).

Die Aktivkohlestreifen 17 sind stoffschlüssig, insbesondere mittels eines Klebstoffs, auf dem Kupferblech 16 festgelegt, um einen möglichst guten Wärmekontakt zu gewährleisten.

Zwischen den Aktivkohlestreifen 17 sind Reihen von Durchzügen 18 ausgebildet, durch die die Flachrohre 11 verlaufen. Die Flachrohre bestehen vorliegend aus Messing. Sie sind in ihren Kontaktbereichen mit den Durchzügen 18 der Bleche 16 hartverlötet, zum Beispiel mittels des "Cuprobraze"-Lötverfahrens. In diesem Fall sind die Bleche 16 aus Kupfer und die Rohre 11 aus Messing mit einem Zinkanteil von 14% und belotet. Optional kann vor der Lötung ein Beizen durchgeführt werden, um die Benetzung zu verbessern.

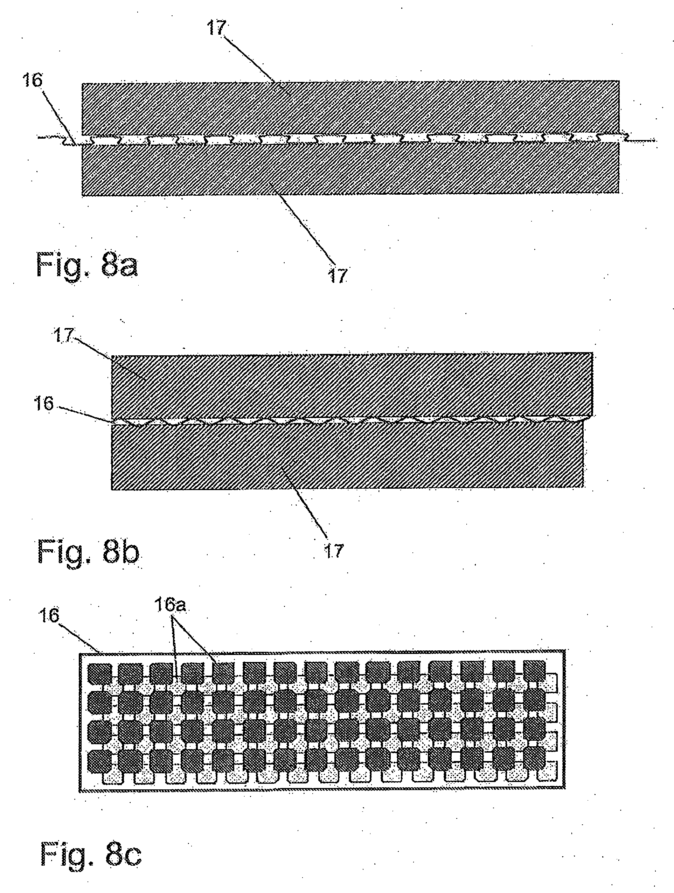

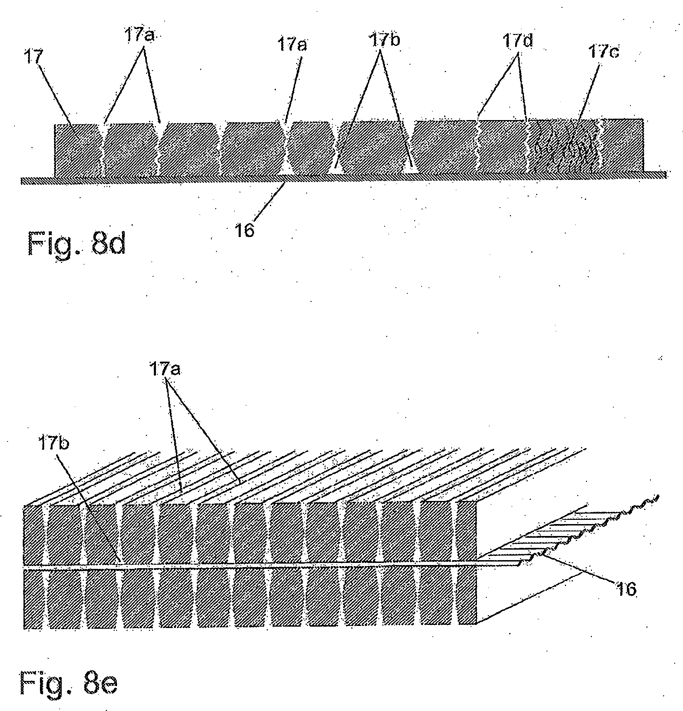

Alternativ zum Hartlötverfahren ist ein Weichlötverfahren einsetzbar, bei dem die Bleche 16 im Bereich der Rohrdurchzüge 18 nur teilweise (z. B. lokales verzinnen) in den Bereichen 18a (siehe Fig. 8) der Rohrdurchzüge 18 vorbelotet sind. Es wird vorgeschlagen, dazu ein Band walztechnisch entsprechend der mittleren gezeigten Zone in Fig. 8 zu Schneiden und in einem weiteren Schritt die Fahnen nach hinten umzubiegen. Dieser Schritt kann auch nach dem Kassettieren der Bleche 16 direkt vor oder beim Durchschieben der Rohre 11 erfolgen. Bei diesem Fügeverfahren sind auch die Messingrohre mindestens außen belotet. Nach dem Durchschieben der Flachrohre 11 kommen die beloteten Blechteile mit den beloteten Rohren 11 in Kontakt und bilden beim Erreichen der Schmelztemperatur vorzugsweise unter einer Schutzgasatmosphäre ohne zusätzliches Flussmittel eine stoffschlüssige Verbindung. Um den Fließprozess zu unterstützen, kommen oxidschichtaufreißende Zusatzmaßnahmen wie mechanische Schwingungen oder eine reduzierende Gasatmosphäre in Betracht. Es ist auch möglich, unmittelbar vor dem Löten einen Beizprozess durchzuführen.

Die Rohre 16 stellen wärmeleitend mit den Blechschichten 16 kontaktierte Strukturen dar, über die ein Wärmeaustausch stattfindet. Die Wärme wird über die Rohre mit dem wärmeführenden Fluid, vorliegend etwa ein Wasser-Glykol-Gemisch, ausgetauscht.

Insbesondere im Fall der Verlötung der Bleche 16 ist die stoffschlüssige Verbindung zwischen Blechen 16 und Sorptionsmittel 17 hochtemperaturfest, insbesondere für Temperaturen oberhalb 300 °C, ausgelegt. Dies kann bevorzugt durch Verwenden eines anorganischen Klebstoffs, zum Beispiel silikatbasierend (z.B. Wasserglas), erfolgen. Alternativ kann auch ein organischer Klebstoff verwendet werden, der nach dem Aufbringen der Aktivkohlestreifen 17 karbonisiert wird, zum Beispiel im Zuge des Hartverlötens. Bei der Karbonisierung wird durch Hitze Wasserstoff abgespalten, und es verbleibt ein mechanisch ausreichend stabiles Kohlenstoffgerüst des Klebers. Gut geeignete organische Kleber, zum Beispiel Phenolharze, haben daher meist eine hohe Kohlenstoffdichte.

Zur Verbesserung der stoffschlüssigen Verbindung wird die Oberfläche des Bleches 16 zumindest bereichsweise einer Aufrauung unterzogen. Diese erfolgt vorliegend durch ein kontrolliertes galvanisches Verfahren, mittels dessen Mikrokristallite von hohem Aspektverhältnis auf die Oberfläche aufgewachsen werden.

Die Aktivkohlestreifen 17 haben auf ihrer Oberseite eine Strukturierung bezüglich einer thermischen Dehnungsrichtung in Form einer Querriffelung 17a. Die Kerben der Riffelung dienen als Sollbruchstellen, um ein Abplatzen der Aktivkohle 17 von den Blechen 16 bei übermäßiger thermischer Ausdehnung zu verhindern. Zugleich bilden die Kerben der Querriffelung zusätzliche Dampfkanäle, um einen optimalen Dampftransport in und aus der Aktivkohle zu gewährleisten.

Fig. 8a zeigt eine mögliche Detailgestaltung einer Strukturierung der Blechschicht 16, die als Plissierung mit überlappenden Flanken ausgebildet ist. Hierdurch kann die thermische Ausdehnung des Blechs 16, zum Beispiel während einer Verlötung der Bauteile im Lötofen (Temperaturen typisch oberhalb 600 °C) besonders gut kompensiert werden. Die Kontaktflächen bzw. stoffschlüssige Anbindung zwischen den Aktivkohle-Formkörpern 17 und der Blechschicht 16 ist senkrecht zur Zeichnungsrichtung streifenförmig.

Fig. 8b zeigt die Anordnung aus Fig. 8a, wobei nur eine sinusförmige, nicht überlappende Wellung in die Blechschicht 16 eingebracht ist.

Fig. 8c zeigt eine mögliche Ausführung, bei der eine Wellung überkreuzend in zwei Richtungen senkrecht zueinander in die Blechschicht 16 eingebracht wurde, so dass beidseitig der Blechebene (gefüllte / ungefüllte Quadrate) Kontaktinseln 16a vorragen. Dies ermöglicht eine Kompensation der thermischen Ausdehnung in mehrere Richtungen.

Zu Möglichkeiten der Strukturierung des Sorptionsmittels bzw. der Aktivkohlestreifen 17 sind in Fig. 8d drei verschiedene Maßnahmen im gleichen Bild gezeigt.

Im linken Bereich sind nur auf der nicht mit dem Blech 16 verbundenen Oberfläche der Aktivkohle 17 Kerben 17a eingebracht. Diese Kerben bilden Sollbruchstellen, an denen die Aktivkohle im Wesentlichen senkrecht zu der Blechebene brechen kann (siehe angedeutete Bruchstellen). Dies verhindert zum Beispiel während eines Hartlötvorgangs im Zuge der Herstellung des Arbeitsmittelspeichers ein Abplatzen der stoffschlüssig angebundenen bzw. aufgeklebten Aktivkohle 17.

Im mittleren Bereich von Fig. 8d sind zusätzlich auf der mit der Blechschicht 16 verbundenen Seite Kerbungen 17b vorgesehen, die Insbesondere mit den oberen Kerbungen 17a fluchten. Dies verbessert die Funktion der Sollbruchstelle und ermöglicht zudem einen besseren Arbeitsmitteltransport in der Nähe der Blechebene. Bei einer weiteren Ausführungsform (nicht dargestellt) können auch ausschließlich blechseitige Kerbungen 17b vorgesehen sein.

Im rechten Bereich von Fig. 8d ist die Integration eines gerichteten Zuschlagstoffes 17c in die Aktivkohle angedeutet. Der Zuschlagstoff 17c kann etwa aus Karbonfasem und/oder Graphitplättchen bestehen. Die Ausrichtung ist im Wesentlichen senkrecht zur Ebene der Blechschicht 16, so dass die Aktivkohle in Richtung der Blechschicht 16 leichter bricht als senkrecht dazu. Der Zuschlagstoff bewirkt somit eine Anisotropie bzw. anisotrope Elastizität oder Bruchfestigkeit der Aktivkohle.

Bei einer thermischen Ausdehnung der Blechschicht 16 entstehen hierdurch Mikrorisse 17d, die wie die Fasern senkrecht zum Blech 16 verlaufen. Somit zerfällt die Aktivkohle in zufällig dimensionierte Schollen, die im Fußbereich stoffschlüssig mit dem Blech 16 verbunden bleiben. Die Risse 17d verbessern zudem den Transport des Arbeitsmittels. Der gerichtet eingebrachte Zuschlagstoff 17c kann zudem die Wärmeleitung durch die Aktivkohle in zur Blechebene senkrechter Richtung verbessern.

Sorptionsmittelstreifen mit senkrecht zur Streifenebene genchtetem Zurschlagstoff können zum Beispiel wie folgt hergestellt werden:
Ein Gemisch aus Aktivkohlepulver, Bindemittel und Zuschlagstoff (Karbonfasern und/oder Graphitplättchen) wird in einer Extrusionsrichtung gepresst, wodurch sich der Zuschlagstoff in der Extrusionsrichtung ausrichtet. An einem Austritt werden senkrecht zu der Austritts- bzw. Extrusionsrichtung Scheiben abgeschnitten, die entweder unmittelbar oder nach weiterem Zuschnitt die Aktivkohle-Formkörper bilden. Es folgt eine Sinterung bei Temperaturen von einigen hundert °C, bei der, meist unter einer gewissen Schrumpfung der Formkörper, das Bindemittel karbonisiert und feste, harte Aktivkohlestreifen erhalten werden.

Diese Streifen werden auf die Blechschichten 16 aufgeklebt, zum Beispiel mittels eines organischen Klebstoffs wie etwa Phenolharz oder eines anorganischen Klebstoffs wie etwa Wasserglas. Im Fall eines organischen Klebstoffs kann während eines Lötvorgangs oder auch in einem vorhergehenden separaten Prozessschritt eine Schmelzung und optionalen Karbonisierung des Klebstoffs erfolgen.

Es versteht sich, dass die einzelnen in Fig. 8 bis Fig. 8d gezeigten Maßnahmen sinnvoll miteinander kombiniert werden können. Beispielhaft hierfür zeigt Fig. 8e eine Anordnung, bei der die Blechschicht 16 eine Wellung wie in Fig. 8b aufweist, wobei das Sorptionsmittel bzw. die Aktivkohlestreifen 17 senkrecht dazu verlaufende Kerbungen 17a, 17b wie in Fig. 8d Mitte haben. Auf diese Weise kann eine thermische Dehnung des Blechs 16 in der einen Richtung durch Brechen der Aktivkohle und in der anderen Richtung durch die Wellung des Blechs kompensiert werden, ohne dass die Aktivkohle 17 von dem Blech 16 abplatzt. Im Ergebnis ist die Aktivkohle bei der Ausführung nach Fig. 8e über Kontaktinseln ähnlich Fig. 8c mit dem Blech 16 verbunden.

Die Strukturierung des Sorptionsmittels und/oder der Blechschicht ist nicht auf vorstehend erläuterte Beispiele beschränkt. Insbesondere kann die Blechschicht zur Kompensation der thermischen Ausdehnung auch Durchbrechungen nach Art eines Gitters aufweisen, zum Beispiel nach Art eines Scher- oder Streckgitters.

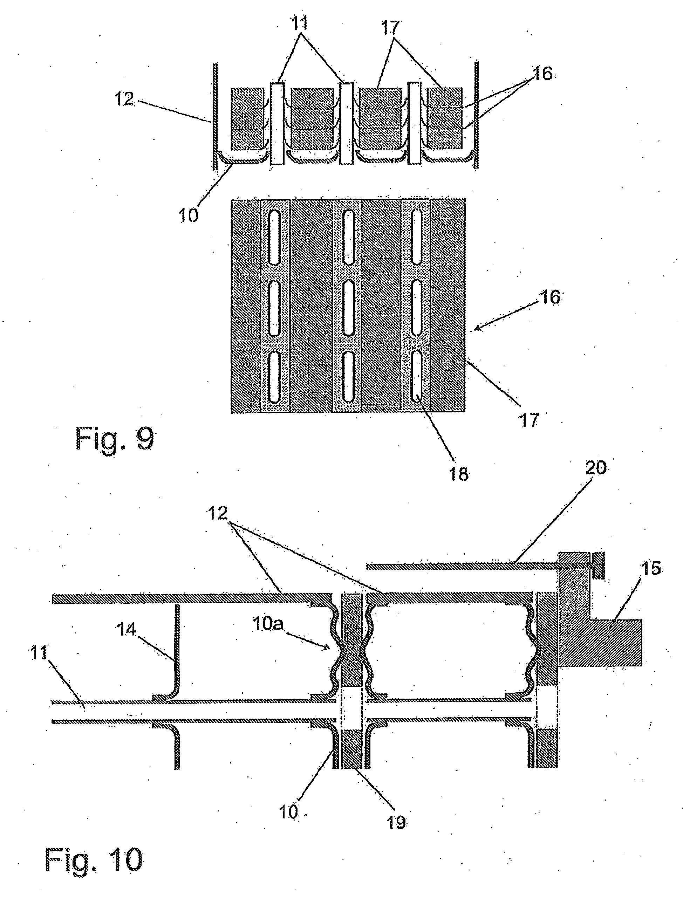

Unabhängig von der konkreten Ausgestaltung der Arbeitsmittelspeicher in den Bereichen A, B verdeutlichen Fig. 10 bis Fig. 12 eine erfindungsgemäße Konstruktion des Wärmeübertragers 1 als in Richtung der Rohre 11 stapelbares Modul. Hierzu ist zumindest einer der beiden Böden 10, bevorzugt beide Böden 10, mit einer Dichtfläche 10a ausgestattet. Die Dichtfläche 10a ist vorliegend nach Art einer die Gruppen 3, 4 von Flachrohren 11 umlaufenden, geschlossenen Wulst ausgeformt. Zwischen zwei aufeinander gestapelten Wärmeübertragern 1 ist eine Flachdichtung 19 eingelegt, an der die Wulste 10a dichtend anliegen. Auf diese Weise bleiben die Strömungskanäle 3, 4 der beiden Bereiche A, B durchgehend voneinander getrennt

Am Ende des Stapels kann auf gleiche Weise ein Wasserkasten 15 an Stelle eines weiteren Wärmeübertragers 1 festgelegt sein.

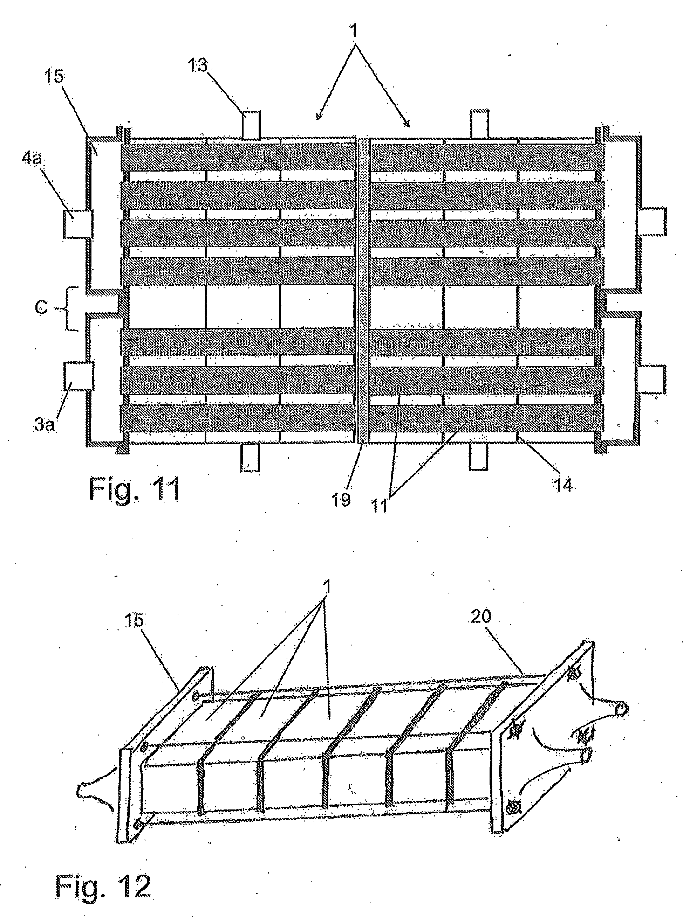

Der Stapel aus Wärmeübertragern 1 und (optional) Wasserkästen 15 wird von Zugankern 20 zusammengehalten (siehe Fig. 10 und Fig. 12).

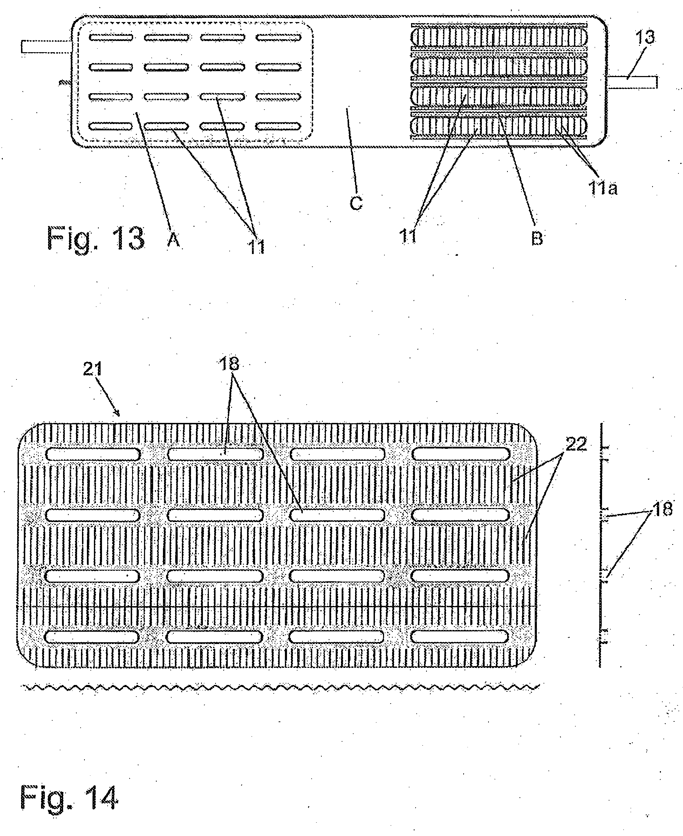

Fig. 13 zeigt einen Querschnitt durch einen Wärmeübertrager, bei dem die Flachrohre 11 des ersten Bereichs A und des zweiten Bereichs B unterschiedlich ausgeformt sind. Im ersten Bereich liegen einfache, schmale Flachrohre zur Durchströmung mit einem flüssigen Fluid von hoher Wärmekapazität vor. Im zweiten Bereich B haben die Flachrohre einen erheblich größeren Querschnitt und zudem eine Innenberippung 11 a zur Verbesserung des Wärmeübergangs zwischen Flachrohr 11 und Fluid. Dies ist insbesondere bei gasförmigen Fluiden wie etwa Luft vorteilhaft, die einen kleinen Wärmekapazitätsstrom liefern. Rein schematisch sind in Fig. 13 die beiden unterschiedlichen Arbeitsmittelspeicher angedeutet. Der Adosrptions-Desorptions-Arbeitsmittelspeicher im Bereich A steht thermisch mit dem flüssigen Fluid in Kontakt, während der Verdampfungs-Kondensations-Arbeitsmittelspeicher mit kapillarischen Strukturen im Bereich B mit dem gasförmigen Fluid in thermischem Kontakt steht.

Fig. 14 bis Fig. 19 betreffen Arbeitsmittelspeicher mit kapillarischen Strukturen, In denen eine flüssige Phase eines Arbeitsmittels gehalten werden kann. Grundsätzlich kann ein solcher Arbeitsmittelspeicher eigenständig ausgebildet sein oder auch, wie in den vorliegenden konkreten Beispielen, integriert in einen Wärmeübertrager 1, der vorliegend zum Aufbau einer Wärmepumpe (zum Beispiel, aber nicht notwendig mit einer Fluidsteuerung nach Fig. 1) dient.

Fig. 14 zeigt mehrere Ansichten einer Blechschicht bzw. eines Blechs 21. In dem Blech 21 sind Reihen von Durchzügen 18 zur Durchführung der Rohre 11 vorgesehen. Zwischen den Reihen sind streifenförmige, strukturierte Bereiche 22 vorgesehen, wobei die Strukturierungen aus vorliegend durch Riffelungen bzw. Mikrowellungen gebildet sind. Allgemein können solche Strukturierungen durch einen Walzschritt in das Blech eingebracht werden, insbesondere in einem Endlosverfahren.

Die Bleche 21 sind zur Ausbildung eines Arbeitsmittelspeichers parallel unter unmittelbarer Berührung übereinander gestapelt, wobei sich beim Stapeln eines Pakets von Blechen an den sich spiegelbildlich gegeneinander abgestützten Wellungen Kapillarspalte bilden, die kondensiertes Arbeitsmittel durch Kapillarkraft festhalten.

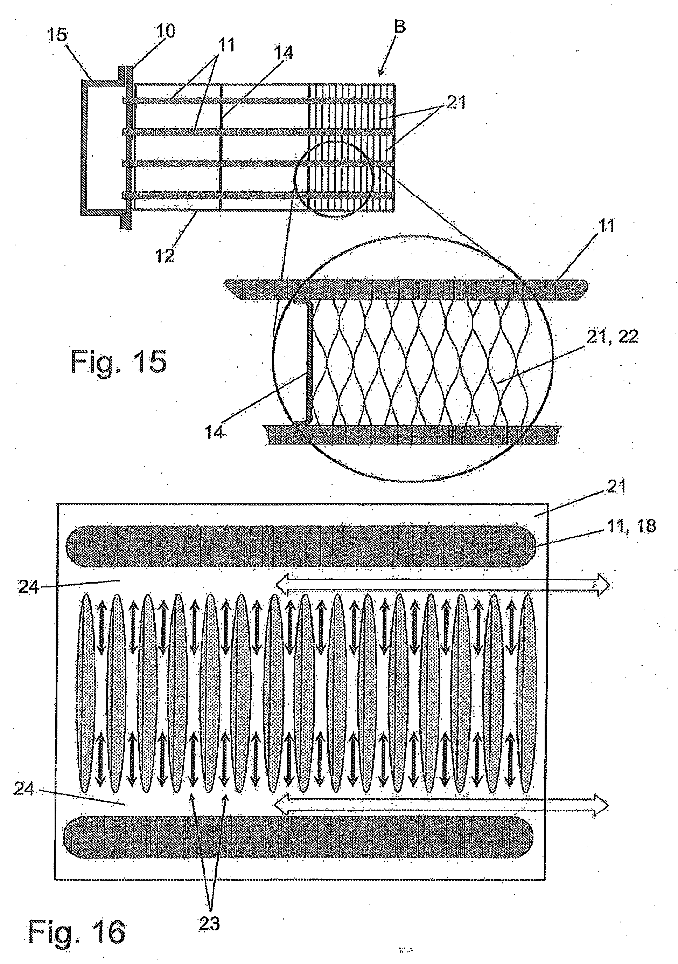

Fig. 15 zeigt einen Schnitt durch einen bereits vorstehend in seinem Aufbau beschriebenen Wärmeübertrager 1 im Bereich B des zweiten Arbeitsmittelspeichers. Ferner ist eine Ausschnittsvergrößerung dargestellt, die die gestapelten und sich berührenden Mikrowellungen 22 zeigt.

In Fig. 16 ist die Funktion des Arbeitsmittelspeichers näher verdeutlicht. Die Wellungen sind in der Schnittdarstellung als senkrechte, gerade Linien erkennbar. Die ovalen, die Linien umgebenden Bereiche stellen kondensiertes und kapillarisch im Spalt gehaltenes Arbeitsmittel dar. Die Pfeile zeigen die Strömungswege des dampfförmigen Arbeitsmittels an. Zwischen benachbarten Wellungen verlaufen zumindest bei nur teilweise gefülltem Speicher kleinere Dampfkanäle 23 (in der Zeichnungsebene von oben nach unten), die in Hauptdampfkanäle 24 münden. Die Hauptdampfkanäle 24 verlaufen parallel zu den Reihen von Flachrohren entlang des Rands der strukturierten Bereiche 22.

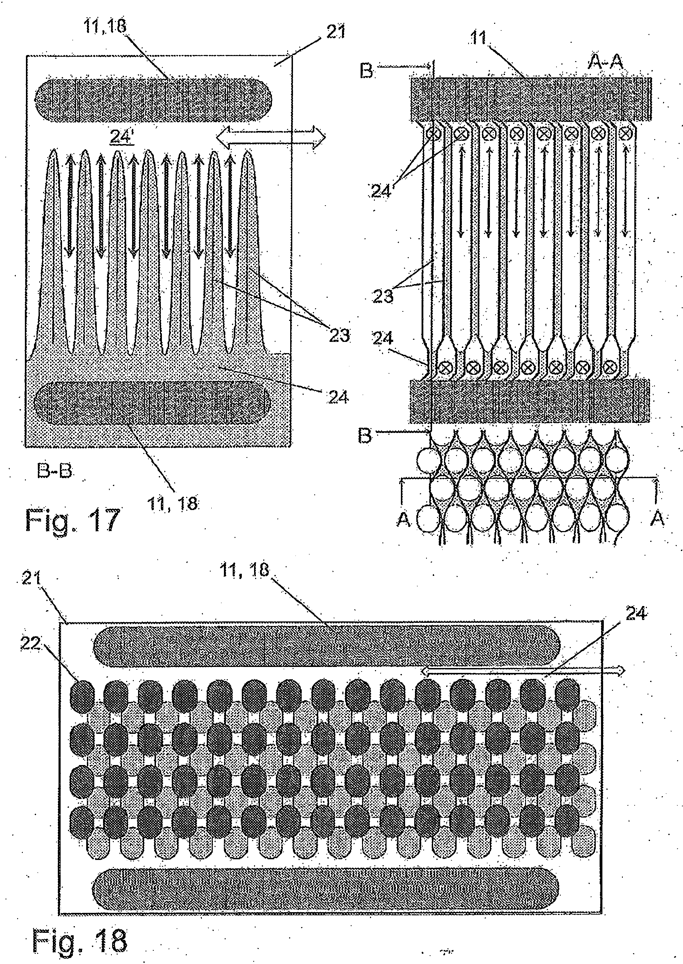

Bei der Abwandlung nach Fig. 17 sind die Strukturierungen senkrecht zur Blechebene dergestalt asymmetrisch ausgeformt, dass einige der Hauptdampfkanäle 24' einen größeren Querschnitt aufweisen als die anderen Hauptdampfkanäle 24. Hierdurch werden im Zuge der Füllung des Arbeitsmittelspeichers zunächst die kleineren Hauptdampfkanäle 24 mit Flüssigkeit gefüllt, während die großen Hauptdampfkanäle 24' bis zuletzt frei bleiben, um einen effektiven Arbeitsmittelaustausch zu gewährleisten.

Im Beispiel nach Fig. 17 werden im Bereich der Hauptdampfkanäle abwechselnd breitere und schmalere Blechabstände generiert. Dies hat den Vorteil, dass auch bei maximaler Arbeitsfüllung der kapillarischen Strukturen immer ein Hauptdampfkanal 24' zwischen zwei benachbarten Blechen offen bleibt, während der schmale Kanal 24 vollständig mit Flüssigkeit gefüllt sein kann. Auf diese Weise bilden sich jeweils kammförmige Flüssigkeitsbrücken (siehe Fig. 17 links), wobei je nach Ebene die Kammspitzen einmal nach oben zeigen und in dem benachbarten Zwischenraum nach unten zeigen. Der Vorteil dieser Ausgestaltung des Paketes aus kapillarischen Strukturen liegt darin, dass das gesamte Paket zu mindestens 50 Volumenprozenten mit Flüssigkeit gefüllt werden kann, ohne das Dampftransportsystem zu verstopfen, was eine sehr hohen Speicherdichte bedeutet.

In einer weiteren Ausführungsform entsprechend Fig. 18 werden Blechschichten 21 eingesetzt, die in den Bereichen zwischen den Rohren 11 zwei überlagerte Mikrowellungen aufweisen. Dabei ergibt sich bei entsprechender Ausführung eine punktförmige gegenseitige Abstützung der Bleche nach oben an den sich überlagernden Wellenbergen und nach unten an den sich überlagernden Wellentälern. In analoger Weise entstehen bei teilweiser Füllung mit Kondensat die gefüllt und ungefüllt dargestellten Flüssigkeitsbrücken in den Bereichen der engsten Spalte. Dadurch wird die verfügbare volumenspezifische Phasengrenzfläche für die Verdampfung nochmals erhöht. Kapillarische Strukturen 22 gemäß Fig. 18 können auch durch Einprägung von Noppen in die Bleche 21 erzeugt werden.

In weiterer Ausgestaltung sind die Bleche aus Metallfolie, insbesondere Kupferfolie, ausgeführt, deren Oberflächen so behandelt sind, dass sich eine möglichst gute Benetzung der Struktur ergibt. Zum Beispiel erfolgt dies durch galvanische Behandlung wodurch die gesamte Blechfläche mit einem Flüssigkeitsfilm überzogen wird, was eine nochmalige Erhöhung der volumenspezifischen Phasengrenzfläche mit gleichzeitig sehr dünner Flüssigkeitsgrenzschicht bewirkt.

In einer hier nicht näher dargestellten Ausführung können die Maßnahmen aus Fig. 17 und Fig. 18 auch kombiniert werden, wodurch sich eine sowohl eines Flüssigkeitsaufnahmevermögen als auch eine große Phasengrenzfläche ergeben würde.

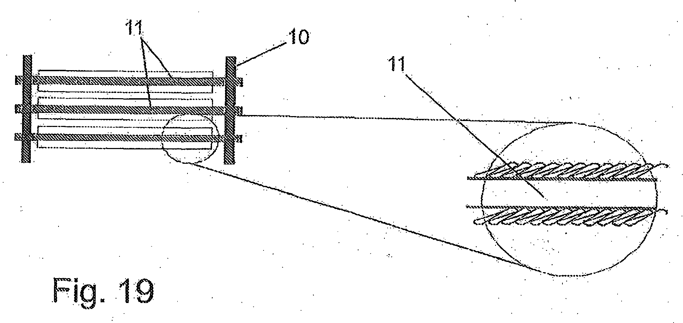

Fig. 19 zeigt eine alternative Ausführungsform eines zweiten Arbeitsmittelspeichers, bei dem die kapillarischen Strukturen gemäß der Lehre der Druckschrift EP 1 918 668 A1 ausgebildet sind. Auch solche Strukturen sind zur Bereitstellung eines Arbeitsmittelspeichers, etwa zur Ausbildung eines erfindungsgemäßen Wärmeübertragers, geeignet.

Zur Herstellung von erfindungsgemäßen Wärmeübertragern 1 kommt die Kombination verschiedener stoffschlüssigerer Fügetechnologien aus der Gruppe Hartlöten, Weichlöten, Schweißen mit allen Ihren prozesstechnischen Varianten in Frage. Vorzugsweise wird der Verbund aus Rohren 11, Blechschichten 16, 21 und Rohrböden 10 mittels Cuprobraze-Verfahren gelötet, bei dem die Rohre vorbelotet sind. In einem zweiten Verfahrensschritt wird der offene Block dann mit dem Gehäusemantel 12, vorzugsweise mit einem Fügeverfahren, komplettiert, bei dem der vorgelötete Block aus Rohren und Arbeitsmittelspeichern die ursprüngliche Löttemperatur zumindest als Ganzes nicht mehr erreicht. Dafür kommen grundsätzlich alle Löt- und Schweißtechnologien in Frage.

Allgemein bevorzugt berühren die Arbeitsmittelspeicher der Bereiche A, B den Gehäusemantel 12 des Wärmeübertragers 1 nicht, wodurch ihre Isolation verbessert ist.

Es versteht sich, dass die besonderen Merkmale der einzelnen Ausführüngsbeispiele je nach Anforderungen sinnvoll miteinander kombiniert werden können.

## Patentansprüche

1. Arbeitsmittelspeicher, umfassend
eine Mehrzahl von Schichten aus Metallblech (16), wobei zumindest einige der Blechschichten (16) mit einer weiteren Struktur (11) wärmeleitend kontaktiert sind,
wobei die Blechschichten (16) stapelartig übereinander angeordnet sind,
wobei auf zumindest einer Seite einer jeweiligen Blechschicht (16) ein Sorptionsmittel (17), insbesondere Aktivkohle, zur Adsorption und Desorption des Arbeitsmittels angeordnet ist, und
wobei das Sorptionsmittel (17) eine gut wärmeleitende, insbesondere stoffschlüssige Verbindung mit der Blechschicht (16) aufweist, wobei das Sorptionsmittel (17) eine Strukturierung (17a) bezüglich mindestens einer thermischen Dehnungsrichtung aufweist und die Strukturierung (17a, 17b) als Kerbung oder Rillung des Sorptionsmittels ausgebildet ist und die weiteren Strukturen (11) als Rohre, insbesondere Flachrohre, ausgebildet sind, wobei in den Blechschichten (16) Durchzüge (18) zur Durchführung der Rohre (11) ausgebildet sind.

2. Arbeitsmittelspeicher nach Anspruch 1, **dadurch gekennzeichnet, dass** das Sorptionsmittel (17) als Monlage einer granulären oder partikulären Schicht beidseitig auf das Metallblech stoffschlüssig aufgebracht ist, insbesondere durch Kleben oder durch einen Binder.

3. Arbeitsmittelspeicher nach einem der vorhergehenden Ansprüche, **dadurch gekennzeichnet, dass** das Sorptionsmittel (17) eine anisotrope Elastizität und/oder Wärmeleitung aufweist, wobei insbesondere eine mechanische Schwächung parallel zu einer thermischen Ausdehnungsrichtung der Blechschicht (16) ausgebildet ist.

4. Arbeitsmittelspeicher nach Anspruch 3, **dadurch gekennzeichnet, dass** dem Sorptionsmittel (17), insbesondere Aktivkohle, ein faseriger oder plättchenförmiger, bezüglich der Anisotropie ausgerichteter Zuschlagstoff (17c), insbesondere Kohlefaser und/oder Graphitplättchen, beigemengt ist.

5. Arbeitsmittelspeicher nach einem der Ansprüche 1 bis 4, **dadurch gekennzeichnet, dass** die Strukturierung als Wellung, Insbesondere überkreuzende Wellung (16a), der Blechschicht ausgebildet ist.

6. Arbeitsmittelspeicher nach einem der vorhergehenden Ansprüche, **dadurch gekennzeichnet, dass** die Blechschichten (16) zumindest im Bereich der stoffschlüssigen Verbindung mit dem Sorptionsmittel (17) eine insbesondere galvanisch erzeugte Aufrauung der Oberfläche aufweisen.

7. Arbeitsmittelspeicher nach einem der vorhergehenden Ansprüche, **dadurch gekennzeichnet, dass** die stoffschlüssige Verbindung Temperaturen oberhalb von 300 °C übersteht, wobei sie insbesondere mittels zumindest einem von beiden, anorganischer Klebstoff oder karbonisierter organischer Klebstoff, ausgebildet ist.

8. Wärmeübertrager, umfassend einen ersten Arbeitsmittelspeicher und einen zweiten Arbeitsmittelspeicher, wobei das Arbeitsmittel zwischen den beiden Arbeitsmittelspeichern verlagerbar ist,
wobei zumindest einer der beiden Arbeitsmittelspeicher nach einem der Ansprüche 1 bis 7 ausgebildet ist.

9. Wärmepumpe, umfassend
eine Mehrzahl von Wärmeübertragern (1), wobei in jedem der Wärmeübertrager (1) zumindest eine erste Zone (A) und eine zweite Zone (B) zur Verlagerung eines in dem Wärmeübertrager (1) angeordneten Arbeitsmittels in Abhängigkeit thermodynamischer Zustandgrößen vorliegen,
wobei jeder der Wärmeübertrager (1) mit seiner ersten Zone (A) mit einem von einem ersten Fluid durchströmbaren ersten Strömungskanal (3) des Wärmeübertragers (1) und mit seiner zweiten Zone (B) mit einem von einem zweiten Fluid durchströmbaren zweiten Strömungskanal (4) des Wärmeübertragers (1) thermisch verbunden ist, so dass jeweils Wärmeenergie zwischen einem der Fluide und einer der Zonen (A, B) austauschbar ist, und
eine Ventilanordnung (6, 7), wobei die Strömungskanäle einer der Zonen durch die Ventilanordnung (6, 7) sequentiell miteinander verschaltbar sind und eine Reihenfolge der Verschaltung mittels der Ventilanordnung (6, 7) im Zuge eines Betriebs der Wärmepumpe wechselt,
**dadurch gekennzeichnet,**
**dass** zumindest einer der Wärmeübertrager als Wärmeübertrager nach Anspruch 8 ausgebildet ist, wobei jeweils in der ersten Zone (A) der erste Arbeitsmittelspeicher und in der zweiten Zone (B) der zweite Arbeitsmittelspeicher angeordnet ist.

## Claims

1. A working medium accumulator, comprising a plurality of layers of metal sheet (16), wherein at least some of the sheet layers (16) are contacted with a further structure (11) in a thermally conductive manner,
wherein the sheet layers (16) are disposed one above the other in a stacked manner,
wherein a sorbent (17), in particular activated carbon, is disposed on at least one side of a particular sheet layer (16) for the adsorption and desorption of the working medium, and
wherein the sorbent (17) has a thermally highly conductive, in particular bonded connection with the sheet layer (16), wherein the sorbent (17) has a patterning (17a) with respect to at least one direction of thermal expansion and the patterning (17a, 17b) is in the form of a notch or filling of the sorbent and the further structures (11) are in the form of tubes, in particular flat tubes, wherein passages (18) are formed in the sheet layers (16) for passage of the tubes (11).

2. The working medium accumulator according to claim 1, **characterised in that** the sorbent (17) is applied as a monolayer of a granular or particulate layer to both sides of the metal sheet in a bonded manner, in particular via adhesion or by using a binding agent.

3. The working medium accumulator according to one of the preceding claims, **characterised in that** the sorbent (17) has an anisotropic elasticity and/or thermal conduction, wherein, in particular, a mechanical weakening is formed parallel to a direction of thermal expansion of the sheet layer (16).

4. The working medium accumulator according to claim 3, **characterised in that** the sorbent (17), in particular activated carbon, is admixed with a fibrous or plateshaped additive (17c), in particular carbon fibre and/or graphite platelets, which is oriented relative to the anisotropy.

5. The working medium accumulator according to one of claims 1 to 4, **characterised in that** the patterning is in the form of undulation, in particular crossing-over undulation (16a), of the sheet layer.

6. The working medium accumulator according to one of the preceding claims, **characterised in that** the sheet layers (16) have a surface that has been roughened in particular galvanically at least in the region of the bonded connection with the sorbent (17).

7. The working medium accumulator according to one of the preceding claims, **characterised in that** the bonded connection resists temperatures above 300°C, wherein it is formed in particular using at least one of either inorganic adhesive or carbonised organic adhesive.

8. A heat exchanger, comprising a first working medium accumulator and a second working medium accumulator, wherein the working medium can be displaced between the two working medium accumulators,
wherein at least one of the two working medium accumulators is designed according to one of claims 1 to 7.

9. A heat pump, comprising
a plurality of heat exchangers (1), wherein each of the heat exchangers (1) comprises at least a first zone (A) and a second zone (B) for the displacement of a working medium disposed in the heat exchanger (1) depending on thermodynamic state variables, wherein each of the heat exchangers (1) is thermally connected via the first zone (A) thereof to a first flow duct (3) of the heat exchanger (1), through which a first fluid can flow, and via a second zone (B) thereof to a second flow duct (4) of the heat exchanger (1), through which a second fluid can flow, thereby enabling thermal energy to be exchanged between one of the fluids and one of the zones (A, B), and
a valve system (6, 7), wherein the flow ducts of one of the zones can be interconnected to one another sequentially via the valve system (6, 7), and an interconnecting sequence changes in the course of an operation of the heat pump by way of the valve system (6, 7),
**characterised in that**
at least one of the heat exchangers is in the form of a heat exchanger according to claim 8, wherein the first working medium accumulator is disposed in the first zone (A), and the second working medium accumulator is disposed in the second zone (B).

## Revendications

1. Accumulateur d'un moyen de travail comprenant une pluralité de couches de tôles métalliques (16), où au moins quelques-unes des couches de tôles (16) sont au contact d'une autre structure (11), de façon thermoconductrice,
où les couches de tôles (16) sont disposées les unes au-dessus des autres en forme de pile,
où un moyen de sorption (17), en particulier un charbon actif, servant à l'adsorption et à la désorption du moyen de travail, est disposé sur au moins un côté d'une couche de tôle respective (16), et
où le moyen de sorption (17) présente un assemblage ayant une bonne capacité de conduction thermique et réalisé en particulier par continuité de matière avec la couche de tôle (16), où le moyen de sorption (17) présente une structuration (17a) concernant au moins une direction de dilatation thermique, et la structuration (17a, 17b) est configurée comme des entailles ou rainures du moyen de sorption, et les autres structures (11) sont configurées comme des tubes, en particulier des tubes plats, où des passages (18) servant à la traversée des tubes (11) sont formés dans les couches de tôles (16).

2. Accumulateur d'un moyen de travail selon la revendication 1, **caractérisé en ce que** le moyen de sorption (17) est appliqué par continuité de matière, en particulier par collage ou par l'intermédiaire d'un liant, sur les deux côtés de la tôle métallique, comme monocouche d'une couche granulaire ou particulaire.

3. Accumulateur d'un moyen de travail selon l'une des revendications précédentes, **caractérisé en ce que** le moyen de sorption (17) présente une élasticité et / ou une conduction thermique anisotrope, où en particulier un affaiblissement mécanique est formé parallèlement à une direction de dilatation thermique de la couche de tôle (16).

4. Accumulateur d'un moyen de travail selon la revendication 3, **caractérisé en ce qu'**un matériau (17c) fibreux ou en forme de plaquettes, aligné par rapport à l'anisotropie, en particulier tel de la fibre de carbone et / ou des plaquettes de graphite, est ajouté et mélangé au moyen de sorption (17), en particulier au charbon actif.

5. Accumulateur d'un moyen de travail selon l'une quelconque des revendications 1 à 4, **caractérisé en ce que** la structuration est configurée comme une ondulation de la couche de tôle, en particulier comme une ondulation (16a) se croisant.

6. Accumulateur d'un moyen de travail selon l'une quelconque des revendications précédentes, **caractérisé en ce que** les couches de tôles (16) présentent, au moins dans l'espace de l'assemblage avec le moyen de sorption (17), réalisé par continuité de matière, une surface rendue rugueuse en particulier par galvanisation.

7. Accumulateur d'un moyen de travail selon l'une quelconque des revendications précédentes, **caractérisé en ce que** l'assemblage réalisé par continuité de matière dépasse des températures supérieures à 300°C, où ledit assemblage est formé en particulier au moyen d'au moins l'une des deux matières, à savoir une colle anorganique ou une colle organique carbonisée.

8. Echangeur de chaleur comprenant un premier accumulateur d'un moyen de travail et un second accumulateur d'un moyen de travail, où le moyen de travail peut être déplacé entre les deux accumulateurs des moyens de travail,
où au moins l'un des deux accumulateurs des moyens de travail est conçu selon l'une quelconque des revendications 1 à 7.

9. Pompe à chaleur comprenant
une pluralité d'échangeurs de chaleur (1), où au moins une première zone (A) et une seconde zone (B) servant au déplacement, en fonction de grandeurs relatives à l'état thermodynamique, d'un moyen de travail disposé dans l'échangeur de chaleur (1), se trouvent dans chacun des échangeurs de chaleur (1), où chacun des échangeurs de chaleur (1) est relié thermiquement à sa première zone (A) par un premier canal d'écoulement (3) de l'échangeur de chaleur (1), traversé par un premier fluide, et est relié thermiquement à sa seconde zone (B) par un second canal d'écoulement (4) de l'échangeur de chaleur (1), traversé par un second fluide, de sorte que de l'énergie thermique peut à chaque fois être échangée entre l'un des fluides et l'une des zones (A, B), et un agencement de vannes (6, 7), où les canaux d'écoulement de l'une des zones peuvent être interconnectés entre eux séquentiellement, grâce à l'agencement des vannes (6, 7), et un ordre de succession de l'interconnexion se modifie au cours d'un fonctionnement de la pompe à chaleur, au moyen de l'agencement des vannes (6, 7),
**caractérisée**
**en ce qu'**au moins l'un des échangeurs de chaleur est conçu comme un échangeur de chaleur selon la revendication 8, où le premier accumulateur d'un moyen de travail est disposé à chaque fois dans la première zone (A), le second accumulateur d'un moyen de travail étant disposé à chaque fois dans la seconde zone (B).
